# EUROPEAN PATENT SPECIFICATION

(11) **EP 3 974 265 B1**
(45) Date of publication and mention of the grant of the patent: **30.08.2023**
(21) Application number: 20198946.4
(22) Date of filing: 29.09.2020
(51) Int. Cl.: B60T 7/04, B60T 7/10, B60T 13/74, F16D 55/226

(54) **MOTOR TRANSMISSION UNIT FOR ELECTRONIC PARKING BRAKE DEVICE**
MOTORGETRIEBEEINHEIT FÜR EINE ELEKTRONISCHE FESTSTELLBREMSVORRICHTUNG
UNITÉ DE TRANSMISSION DE MOTEUR POUR DISPOSITIF DE FREIN DE STATIONNEMENT ÉLECTRONIQUE

(43) Date of publication of application: 30.03.2022
(73) Proprietor: Kema Enterprise Co., Ltd., Taichung 43964 (TW)
(72) Inventor: Chen, Chung Hao, 43964 Taichung (TW)
(74) Representative: Cabinet Chaillot

(56) References cited:
- CN-U- 201 872 738
- JP-A- 2013 189 027
- KR-A- 20110 125 140
- KR-A- 20120 060 069
- US-A1- 2011 240 418
- US-B1- 9 850 971
- US-B2- 8 794 720

## Description

### BACKGROUND OF THE INVENTION

### 1. Fields of the invention

The present invention relates to a motor transmission unit for an electronic parking brake device for vehicles.

### 2. Descriptions of Related Art

The conventional motor transmission unit for vehicle electronic parking brake device is disclosed in TW 104214409 and includes a motor whose output shaft is co-rotatably connected with a pivotal transmission shaft to drive an eccentric shaft. The eccentric end of the eccentric shaft is located in and restricted by a recess of a push rod, so that when the transmission shaft drives the eccentric shaft, the eccentric shaft can only move toward a direction away from the transmission shaft such that the eccentric shaft is not co-rotated with the transmission shaft. The push rod pushes the first lining plate and contacts one side of the brake disk. Because the eccentric shaft moves toward the direction away from the transmission shaft, the distance between the eccentric shaft and the transmission shaft increases, and the transmission shaft drives the cap toward a direction away from the first lateral part, such that the guide board of the cap moves and push the second lining plate to contact the other side of the brake disk to complete electronic parking action by the motor.

However, when the eccentric shaft is driven by the transmission, the eccentric end has to continuously contact against the inside of the recess of the push rod so as to ensure that the eccentric rod does not rotate and to move linearly relative to the transmission shaft. During the action, the eccentric rod cannot avoid from slightly shaking and swinging. The eccentric rod also applies a force to the seal ring during the shanking and swinging action, and this reduces the life of the seal ring which tends to be deformed quickly. The brake oil may leak from the deformed seal ring.

Documents JP 2013 189027 A, US 2011/240418 A1 and US 9 850 971 B1 disclose a motor transmission unit according to the preamble of claim 1. US 8 794 720 B2 illustrates another example of a motor transmission unit for electronic parking brake device.

The present invention intends to provide a motor transmission unit for an electronic parking brake device for vehicles to eliminate shortcomings mentioned above.

### SUMMARY OF THE INVENTION

The present invention is defined in claim 1 and relates to a motor transmission unit for an electronic parking brake device, and comprises a case, a driving member, a board, a rod and a push unit. The case is slidably mounted, through a cap, on a clamp. The case includes a passage which is open toward the cap. The driving member is inserted into the case and partially located in the passage of the case. The board is threadedly mounted to the driving member and located in the passage. The board includes a first end face and a second end face, wherein the first end face faces the passage. The rod is located between an inner periphery of the passage and the board. The push unit includes a first end thereof contacting the first end face, and a second end that is inserted in the clamp. A seal ring is mounted to the push unit. A portion of the second end of the push unit is located in a chamber of the clamp and contacts a piston.

When the driving member is driven, the board moves axially along the driving member and toward the clamp. The board is restricted by the rod and does not rotate. The first end face of the board pushes the push unit which moves axially, and moves the piston to push a lining plate of the clamp to contact a brake disk.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the motor transmission unit for an electronic parking brake device of the present invention;
Fig. 2 shows the motor transmission unit, the clamp, the cap and the piston and the lining plate of the present invention;
Fig. 3 is an exploded view of the motor transmission unit for an electronic parking brake device of the present invention;
Fig. 4 is a cross sectional view, taken along line IV-IV in Fig. 1;
Fig. 5 shows is a cross sectional view to show the motor transmission unit when the driving member is driven by a force;
Fig. 6 an exploded view of the second embodiment of the motor transmission unit for an electronic parking brake device of the present invention;
Fig. 7 is a cross sectional view of the second embodiment of the motor transmission unit for an electronic parking brake device of the present invention;
Fig. 8 shows is a cross sectional view to show the motor transmission unit when the driving member of the second embodiment is driven by a force;
Fig. 9 an exploded view of the third embodiment of the motor transmission unit for an electronic parking brake device of the present invention;
Fig. 10 is a cross sectional view of the third embodiment of the motor transmission unit for an electronic parking brake device of the present invention;
Fig. 11 shows is a cross sectional view to show the motor transmission unit when the driving member of the third embodiment is driven by a force;
Fig. 12 an exploded view of the fourth embodiment of the motor transmission unit for an electronic parking brake device of the present invention;
Fig. 13 is a cross sectional view of the fourth embodiment of the motor transmission unit for an electronic parking brake device of the present invention, and
Fig. 14 shows is a cross sectional view to show the motor transmission unit when the driving member of the fourth embodiment is driven by a force.

### DETAILED DESCRIPTION OF THE PREFERRED EMBODIMENT

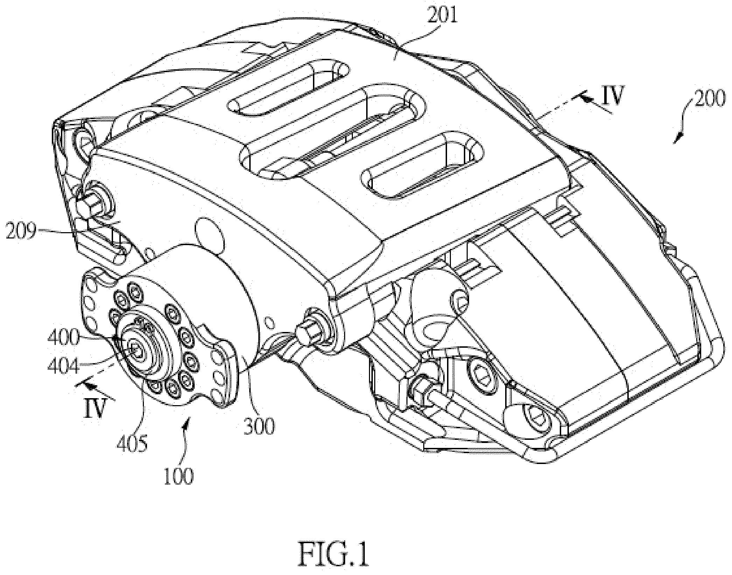

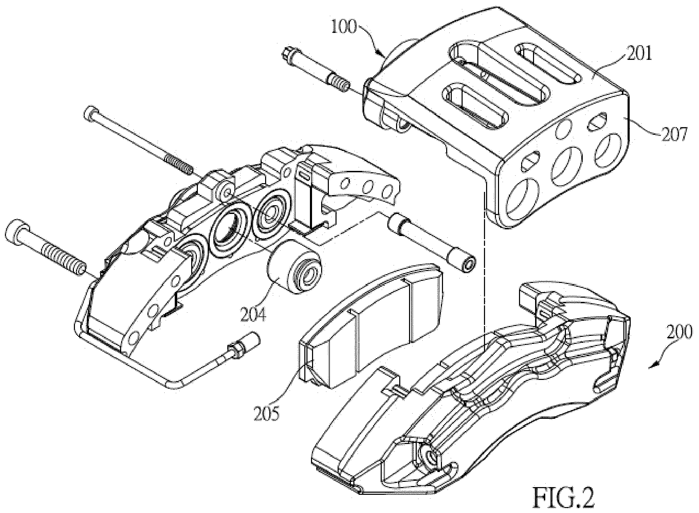

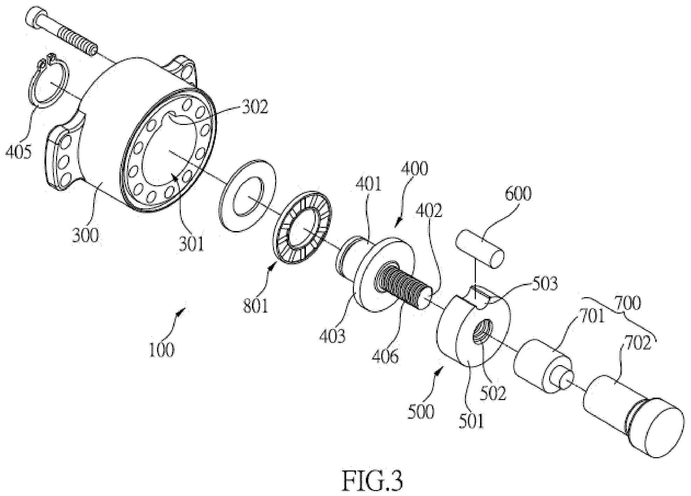

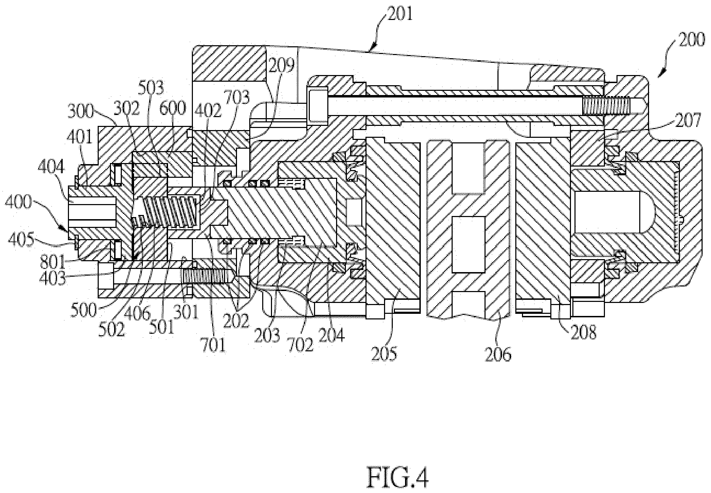

Referring to Figs. 1 to 5, the show the motor transmission unit 100 for an electronic parking brake device of the present invention comprises a case 300, a driving member 400, a board 500, a rod 600 and a push unit 700.

The case 300 is slidably mounted, through the left side 209 of a cap 201, on a clamp 200. The case 300 includes a passage 301 which opens toward the cap 201. The driving member 400 is inserted into the case 300 and partially located in the passage 301 of the case 300. The board 500 is threadedly mounted to the driving member 400 and located in the passage 301. The board 500 includes a first end face 501 and a second end face 504 which is located opposite to the first end face 501. The first end face 501 faces the passage 301. The rod 600 is located between the inner periphery of the passage 301 and the board 500. The push unit 700 includes a first end thereof contacting the first end face 501, and a second end of the push unit 700 is inserted in the clamp 200. A seal ring 202 is mounted to the push unit 700. A portion of the second end of the push unit 700 is located in a chamber 203 of the clamp 200 and contacts a piston 204.

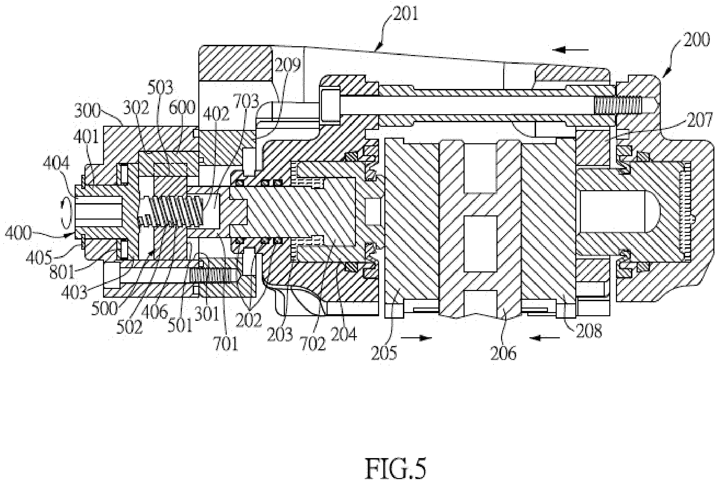

When the driving member 400 is driven and rotated by a force (as shown by arrow head in Fig. 5), the board 500 moves axially along the driving member 400 and toward the clamp 200. The board 500 is restricted by the rod 600 and does not rotate. The first end face 501 of the board 500 pushes the push unit 700 which moves axially and moves the piston 204 to push a lining plate 205 of the clamp 200 to contact a brake disk 206.

The board 500 is restricted by the rod 600 so that the board 500 can only move along the driving member 400 and does not rotate. Therefore, the board 500 directly pushes the push unit 700 to move axially, and the push unit 700 pushes the lining plate 205 of the clamp 200 to contact the brake disk 206 to stop the vehicle. Because the push unit 700 does not rotate and swing, so that the seal ring 202 is not deformed and twisted to achieve the purpose of the present invention. The push unit 700 is moved by the driving member 400 so that the driving member 400 drives the cap 201 to move toward the left side in the drawing, and the right side 207 of the cap 201 pushes the lining plate 208 to contact the brake disk 206 to park the vehicle. When the motor is operated to rotate in opposite direction, the brake action is released.

Specially, the driving member 400 includes a fist section 401 and a second section 402, and a flange 403 is located between the first and second sections 401, 402. The first section 401 extends through the case 300. The flange 403 is located in the passage 301. The board 500 is threadedly connected to the second section 402. The diameter of the flange 403 is larger than that of each of the first and second sections 401, 402. The flange 403 prevents the driving member 400 from dropping from the passage 301. The first section 401 includes a recess 404 to which an output shaft of a motor (both not shown) is connected. A clip 405 is mounted to outside of the first section 401 to restrict the driving member 400 from dropping from the passage 301.

The second section 402 of the driving member 400 includes outer threads 406 defined in the outer periphery thereof. The board 500 includes inner threads 502 which are threadedly connected to the outer threads 406. It is noted that the outer threads 406 and the inner threads 502 both have double threads so that the board 500 can move fast.

Furthermore, a needle roller thrush bearing 801 is mounted to the first section 401 of the driving member 40. The needle roller thrush bearing 801 is located between the inner periphery of the passage 301 and the flange 403. The needle roller thrush bearing 801 avoids the flange 403 from contacting the inner periphery of the passage 301 so that the flange 403 rotates smoothly.

A first slot 302 is defined in the inner periphery of the passage 301. A second slot 503 is defined in the outer periphery of the board 500, so that the rod 600 is accommodated between the first and second slots 302, 503. The rod 600 is a round cylindrical rod, and the first and second slots 302, 503 form a space which is shaped to accommodate the rod 600. Therefore, the rod 600 keeps the board 500 to move axially and does not rotate.

The push unit 700 includes a first part 701 and a second part 702 which is connected to the first part 701. The first part 701 contacts the first end face 501, and the second part 702 contacts the piston 204. The seal ring 202 of the clamp 200 is mounted to the second part 702. The first part 701 and the second part 702 are connected in a protrusion-and-recess pattern. The first part 701 includes a room 703 defined in an end thereof which contacts the first end face 501 of the board 500. The second section 402 does not contact the inside of the room 703.

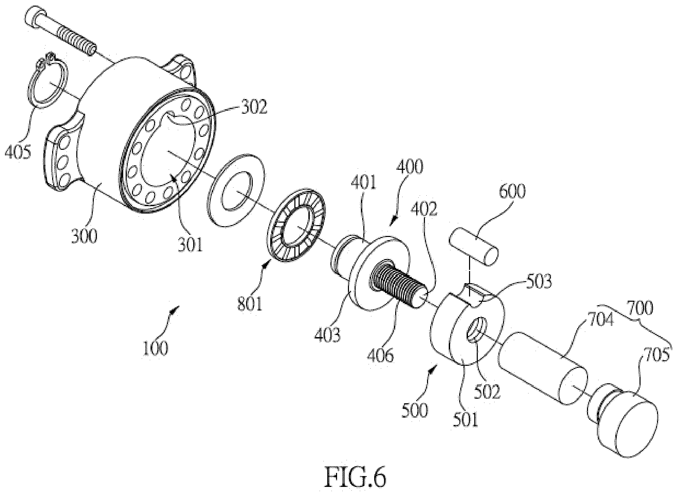

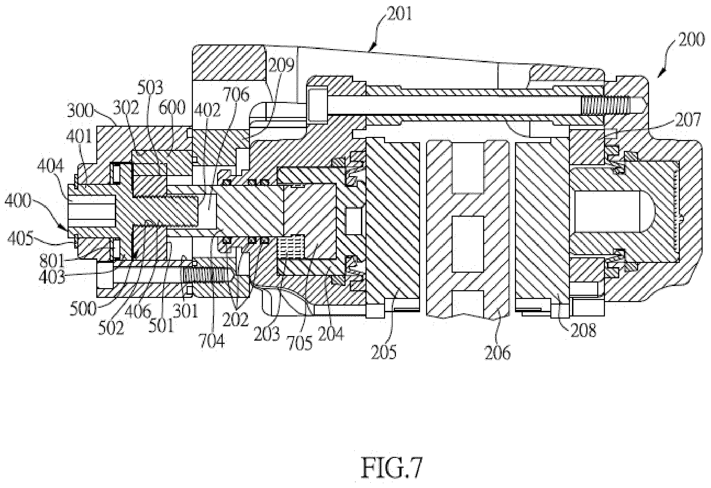

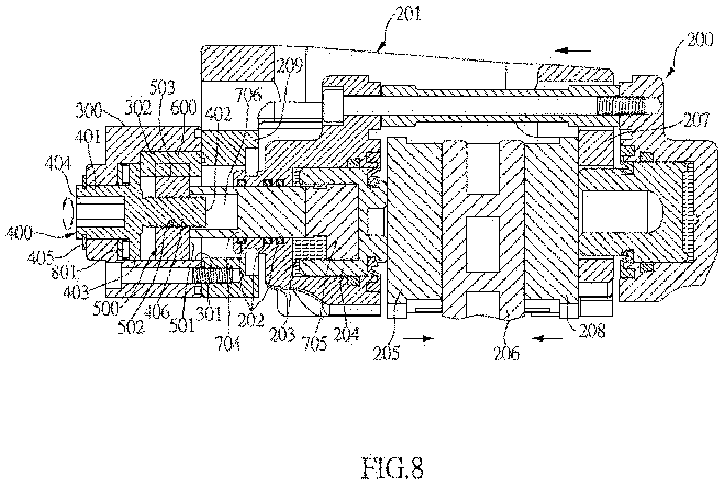

As shown in Figs. 6 to 8, the second embodiment is disclosed, wherein the push unit 700 includes a shank 704 and a head 705 which is formed to the shank 704. The seal ring 202 of the clamp 200 is mounted to the shank 704, and the head 705 contacts the piston 204. The shank 704 and the head 705 are two individual parts and are connected each other by any known method such as welding. The head 705 is eccentrically located relative to the shank 704. The shank 704 includes a room 706 defined in the distal end opposite to the head 705. The distal end of the shank 704 contacts the first end face 501 of the board 500. The second section 402 of the driving member 400 is located in the room 706 of the shank 704 and is not in contact with an inside of the room 706.

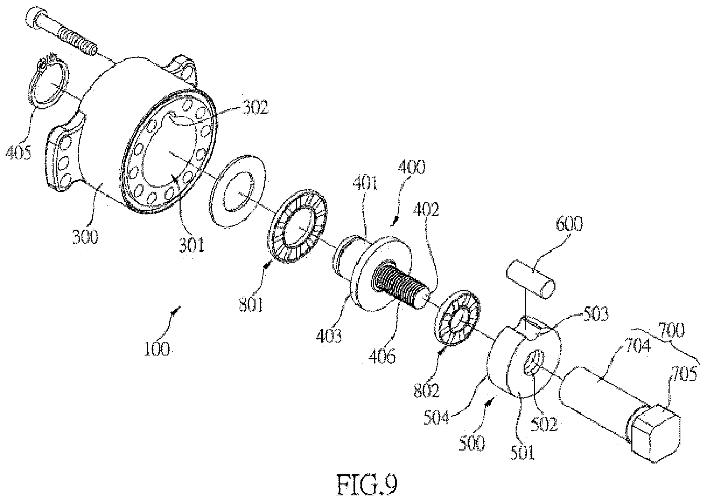

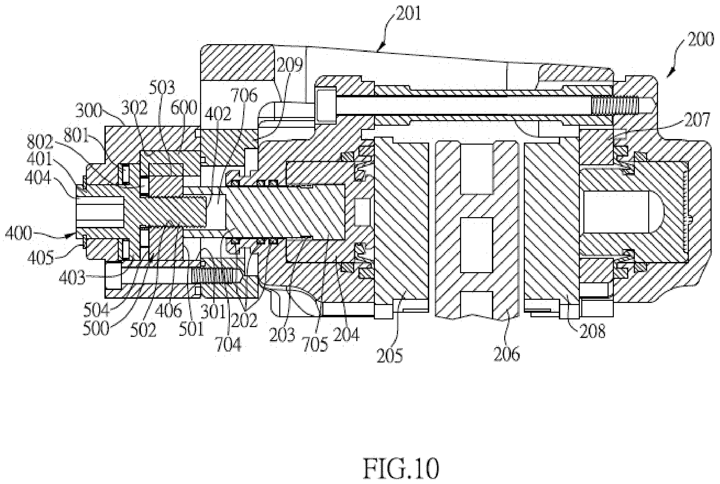

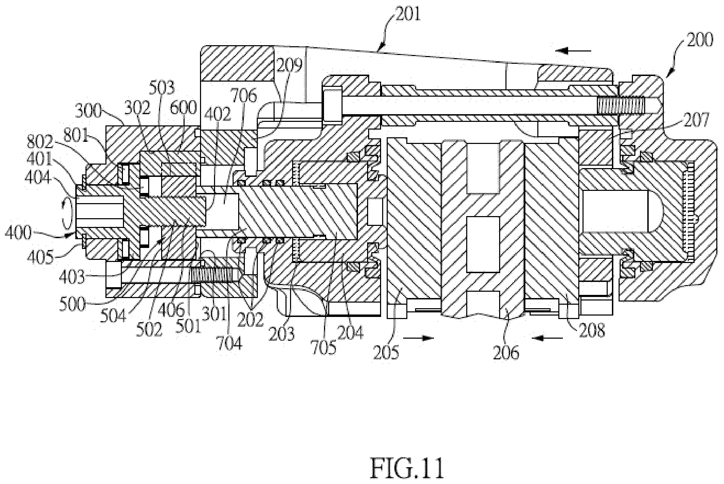

As shown in Figs. 9 to 11, the third embodiment is disclosed, the difference between the second and the third embodiments is that the head 705 is co-axially located relative to the shank 704. Another needle roller thrush bearing 802 is mounted to the second section 402 of the driving member 40. The another needle roller thrush bearing 802 is located between the second end face 504 of the board 500 and the flange 403. The board 500 and the driving member 400 are threadedly connected to each other, and the threads of the board 500 and the driving member 400 are single thread.

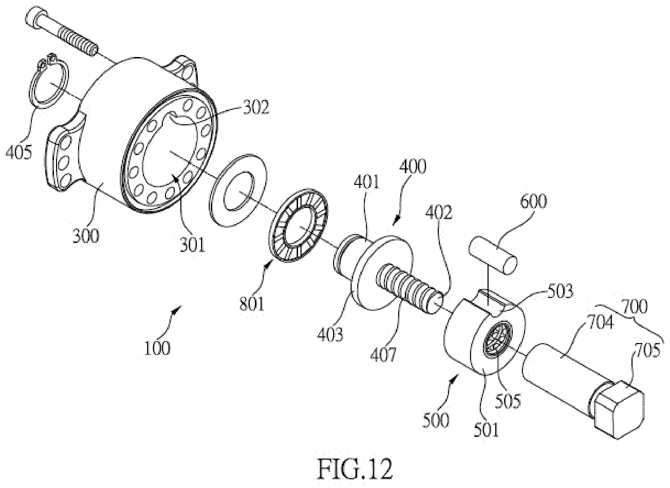

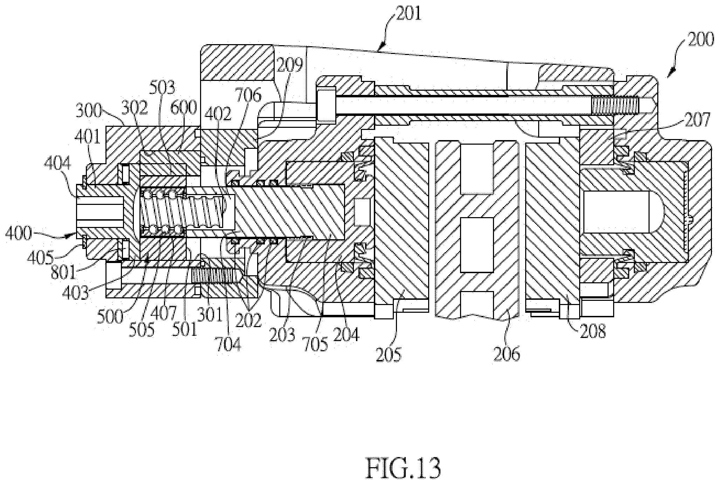

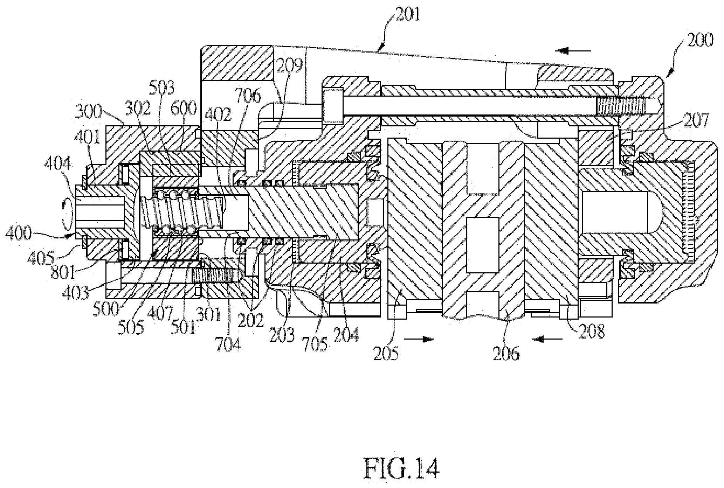

As shown in Figs. 12 to 14, the fourth embodiment is disclosed, the difference between the third and the fourth embodiments is that the second section 402 of the driving member 400 includes a groove 407 spirally defined in the outer periphery thereof. The board 500 includes balls 505 which are movably received in the groove 407.

While we have shown and described the embodiment in accordance with the present invention, it should be clear to those skilled in the art that further embodiments may be made without departing from the scope of the present invention.

## Claims

1. A motor transmission unit (100) for an electronic parking brake device, comprising:
a case (300) having a passage (301);
a driving member (400) inserted into the case (300) and partially located in the passage (301) of the case (300);
a board (500) threadedly mounted to the driving member (400) and located in the passage (301), the board (500) having a first end face (501) facing the passage (301), and a second end face (504);
**characterized in that** the case (300) is slidably mounted, through a cap (201), on a clamp (200), the passage (301) of the case (300) opening toward the cap (201);
and **in that** the motor transmission unit (100) further comprises
a rod (600) located between an inner periphery of the passage (301) and the board (500) such that the board (500) is restricted by the rod (600) and does not rotate; and
a push unit (700) having a first end thereof contacting the first end face (501), a second end of the push unit (700) being inserted in the clamp (200), a seal ring (202) being mounted to the push unit (700), a portion of the second end of the push unit (700) being located in a chamber (203) of the clamp (200) and contacting a piston (204);
the motor transmission unit (100) being configured such that when the driving member (400) is driven, the board (500) moves axially along the driving member (400) and toward the clamp (200), the first end face (501) of the board (500) pushes the push unit (700) which moves axially and moves the piston (204) to push a lining plate (205) of the clamp (200) to contact a brake disk (206).

2. The motor transmission unit (100) for an electronic parking brake device as claimed in claim 1, wherein the driving member (400) includes a fist section (401) and a second section (402), a flange (403) is located between the first and second sections (401, 402), the first section (401) extends through the case (300), the flange (403) is located in the passage (301), the board (500) is threadedly connected to the second section (402).

3. The motor transmission unit (100) for an electronic parking brake device as claimed in claim 2, wherein the second section (402) of the driving member (400) includes a groove (407) spirally defined in an outer periphery thereof, the board (500) includes balls (505) which are movably received in the groove (407).

4. The motor transmission unit (100) for an electronic parking brake device as claimed in claim 2, wherein the second section (402) of the driving member (400) includes outer threads (406) defined in an outer periphery thereof, the board (500) includes inner threads (502) which are threadedly connected to the outer threads (406), the outer threads (406) and the inner threads (502) are double threads.

5. The motor transmission unit (100) for an electronic parking brake device as claimed in claim 2, wherein a needle roller thrush bearing (801) is mounted to the first section (401) of the driving member (400), the needle roller thrush bearing (801) is located between the inner periphery of the passage (301) and the flange (403).

6. The motor transmission unit (100) for an electronic parking brake device as claimed in claim 2, wherein another needle roller thrush bearing (802) is mounted to the second section (402) of the driving member (400), the another needle roller thrush bearing (802) is located between the second end face (504) of the board (500) and the flange (403), the first and second end faces (501, 504) are located opposite to each other.

7. The motor transmission unit (100) for an electronic parking brake device as claimed in claim 1, wherein the push unit includes a shank (704) and a head (705) which is formed to the shank (704), the seal ring (202) of the clamp (200) is mounted to the shank (704), the head (705) contacts the piston (204).

8. The motor transmission unit (100) for an electronic parking brake device as claimed in claim 7, wherein the head (705) is eccentrically or co-axially located relative to the shank (704).

9. The motor transmission unit (100) for an electronic parking brake device as claimed in claim 7, wherein the shank (704) includes a room (706) defined in a distal end opposite to the head (705), the distal end of the shank (704) contacts the first end face (501) of the board (500), the second section (402) of the driving member (400) is located in the room (706) of the shank (704) and is not in contact with an inside of the room (706).

10. The motor transmission unit (100) for an electronic parking brake device as claimed in claim 1, wherein the push unit (700) includes a first part (701) and a second part (702) which is connected to the first part (701), the first part (701) contacts the first end face (501), the second part (702) contacts the piston (204), the seal ring (202) of the clamp (200) is mounted to the second part (702).

11. The motor transmission unit (100) for an electronic parking brake device as claimed in claim 10, wherein the first part (701) and the second part (702) are connected in a protrusion-and-recess pattern, the first part (701) includes a room (703) defined in an end thereof which contacts the first end face (501) of the board (500).

12. The motor transmission unit (100) for an electronic parking brake device as claimed in claim 1, wherein a first slot (302) is defined in an inner periphery of the passage (301), a second slot (503)is defined in an outer periphery of the board (500), the rod (600) is accommodated between the first and second slots (302, 503).

## Patentansprüche

1. - Motorgetriebeeinheit (100) für eine elektronische Feststellbremsvorrichtung, umfassend:
ein Gehäuse (300), aufweisend einen Durchgang (301) ;
ein Antriebselement (400), das in das Gehäuse (300) eingeführt ist und sich teilweise im Durchgang (301) des Gehäuses (300) befindet;
eine Platte (500), die schraubbar an das Antriebselement (400) montiert ist und sich im Durchgang (301) befindet, wobei die Platte (500) eine erste Endfläche (501), die dem Durchgang (301) gegenüber liegt, und eine zweite Endfläche (504) aufweist;
**dadurch gekennzeichnet, dass** das Gehäuse (300) durch eine Kappe (201) auf einer Klemme (200) gleitbar montiert ist, wobei sich der Durchgang (301) des Gehäuses (300) hin zur Kappe (201) öffnet;
und dadurch, dass die Motorgetriebeeinheit (100) weiter Folgendes umfasst:
eine Stange (600), die sich zwischen einem inneren Umfang des Durchgangs (301) und der Platte (500) befindet, so dass die Platte (500) durch die Stange (600) eingeschränkt ist und sich nicht dreht; und
eine Schiebeeinheit (700), von der ein erstes Ende mit der ersten Endfläche (501) in Kontakt ist, und wobei ein zweites Ende der Schiebeeinheit (700) in die Klemme (200) eingeführt ist, wobei ein Dichtungsring (202) auf die Schiebeeinheit (700) montiert ist, wobei sich ein Abschnitt des zweiten Endes der Schiebeeinheit (700) in einer Kammer (203) der Klemme (200) befindet und mit einem Kolben (204) in Kontakt ist;
wobei die Motorgetriebeeinheit (100) derart konfiguriert ist, dass, wenn das Antriebselement (400) angetrieben wird, sich die Platte (500) axial entlang des Antriebselements (400) und hin zur Klemme (200) bewegt, die erste Endfläche (501) der Platte (500) die Schiebeeinheit (700) schiebt, die sich axial bewegt und den Kolben (204) bewegt, um eine Auskleidungsplatte (205) der Klemme (200) zu schieben, um mit einer Bremsscheibe (206) in Kontakt zu sein.

2. - Motorgetriebeeinheit (100) für eine elektronische Feststellbremsvorrichtung nach Anspruch 1, wobei das Antriebselement (400) einen ersten Abschnitt (401) und einen zweiten Abschnitt (402) beinhaltet, sich ein Flansch (403) zwischen dem ersten und dem zweiten Abschnitt (401, 402) befindet, der erste Abschnitt (401) durch das Gehäuse (300) erstreckt, der Flansch (403) im Durchgang (301) befindet, die Platte (500) schraubbar mit dem zweiten Abschnitt (402) verbunden ist.

3. - Motorgetriebeeinheit (100) für eine elektronische Feststellbremsvorrichtung nach Anspruch 2, wobei der zweite Abschnitt (402) des Antriebselements (400) eine Nut (407) beinhaltet, die spiralförmig in einem äußeren Umfang davon definiert ist, die Platte (500) Kugeln (505) beinhaltet, die beweglich in der Nut (407) aufgenommen sind.

4. - Motorgetriebeeinheit (100) für eine elektronische Feststellbremsvorrichtung nach Anspruch 2, wobei der zweite Abschnitt (402) des Antriebselements (400) Außengewinde (406) beinhaltet, die in einem äußeren Umfang davon definiert sind, wobei die Platte (500) Innengewinde (502) beinhaltet, die schraubbar mit den Außengewinden (406) verbunden sind, wobei die Außengewinde (406) und die Innengewinde (502) Doppelgewinde sind.

5. - Motorgetriebeeinheit (100) für eine elektronische Feststellbremsvorrichtung nach Anspruch 2, wobei ein Axialnadellager (801) an den ersten Abschnitt (401) des Antriebselements (400) montiert ist, wobei sich das Axialnadellager (801) zwischen dem inneren Umfang des Durchgangs (301) und dem Flansch (403) befindet.

6. - Motorgetriebeeinheit (100) für eine elektronische Feststellbremsvorrichtung nach Anspruch 2, wobei ein weiteres Axialnadellager (802) an den zweiten Abschnitt (402) des Antriebselements (400) montiert ist, wobei sich das andere Axialnadellager (802) zwischen der zweiten Endfläche (504) der Platte (500) und dem Flansch (403) befindet, wobei sich die erste und die zweite Endfläche (501, 504) einander gegenüberliegend befinden.

7. - Motorgetriebeeinheit (100) für eine elektronische Feststellbremsvorrichtung nach Anspruch 1, wobei die Schiebeeinheit einen Schaft (704) und einen Kopf (705) beinhaltet, der an den Schaft (704) gebildet ist, der Dichtungsring (202) der Klemme (200) auf den Schaft (704) montiert ist, der Kopf (705) mit dem Kolben (204) in Kontakt ist.

8. - Motorgetriebeeinheit (100) für eine elektronische Feststellbremsvorrichtung nach Anspruch 7, wobei sich der Kopf (705) exzentrisch oder koaxial mit Bezug auf den Schaft (704) befindet.

9. - Motorgetriebeeinheit (100) für eine elektronische Feststellbremsvorrichtung nach Anspruch 7, wobei der Schaft (704) einen Raum (706) beinhaltet, der in einem distalen Ende gegenüber dem Kopf (705) definiert ist, das distale Ende des Schafts (704) mit der ersten Endfläche (501) der Platte (500) in Kontakt ist, sich der zweite Abschnitt (402) des Antriebselements (400) im Raum (706) des Schafts (704) befindet und nicht mit einer Innenseite des Raums (706) in Kontakt ist.

10. - Motorgetriebeeinheit (100) für eine elektronische Feststellbremsvorrichtung nach Anspruch 1, wobei die Schiebeeinheit (700) einen ersten Teil (701) und einen zweiten Teil (702) beinhaltet, der mit dem ersten Teil (701) verbunden ist, der erste Teil (701) mit der ersten Endfläche (501) in Kontakt ist, der zweite Teil (702) mit dem Kolben (204) in Kontakt ist, der Dichtungsring (202) der Klemme (200) an den zweiten Teil (702) montiert ist.

11. - Motorgetriebeeinheit (100) für eine elektronische Feststellbremsvorrichtung nach Anspruch 10, wobei der erste Teil (701) und der zweite Teil (702) in einem Vorsprungs-und-Aussparungs-Muster verbunden sind, der erste Teil (701) einen Raum (703) beinhaltet, der in einem Ende davon definiert ist, das mit der ersten Endfläche (501) der Platte (500) in Kontakt ist.

12. - Motorgetriebeeinheit (100) für eine elektronische Feststellbremsvorrichtung nach Anspruch 1, wobei ein erster Schlitz (302) in einem inneren Umfang des Durchgangs (301) definiert ist, ein zweiter Schlitz (503) in einem äußeren Umfang der Platte (500) definiert ist, die Stange (600) zwischen dem ersten und dem zweiten Schlitz (302, 503) aufgenommen ist.

## Revendications

1. - Unité de transmission de moteur (100) pour un dispositif de frein de stationnement électronique, comprenant :
un boîtier (300) ayant un passage (301) ;
un élément d'entraînement (400) introduit dans le boîtier (300) et situé en partie dans le passage (301) du boîtier (300) ;
un plateau (500) monté par filetage sur l'élément d'entraînement (400) et situé dans le passage (301), le plateau (500) ayant une première face d'extrémité (501) faisant face au passage (301), et une seconde face d'extrémité (504) ;
**caractérisée par le fait que** le boîtier (300) est monté de manière coulissante, par l'intermédiaire d'un capuchon (201), sur un élément de serrage (200), le passage (301) du boîtier (300) s'ouvrant vers le capuchon (201),
et **par le fait que** l'unité de transmission de moteur (100) comprend en outre
une tige (600) située entre une périphérie intérieure du passage (301) et le plateau (500) de telle sorte que le plateau (500) est limité par la tige (600) et ne tourne pas ; et
une unité de poussée (700) ayant une première extrémité de celle-ci venant en contact avec la première face d'extrémité (501), une seconde extrémité de l'unité de poussée (700) étant introduite dans l'élément de serrage (200), une bague d'étanchéité (202) étant montée sur l'unité de poussée (700), une partie de la seconde extrémité de l'unité de poussée (700) étant située dans une chambre (203) de l'élément de serrage (200) et venant en contact avec un piston (204) ;
l'unité de transmission de moteur (100) étant configurée de telle sorte que, lorsque l'élément d'entraînement (400) est entraîné, le plateau (500) se déplace axialement le long de l'élément d'entraînement (400) et vers l'élément de serrage (200), la première face d'extrémité (501) du plateau (500) pousse l'unité de poussée (700) qui se déplace axialement et déplace le piston (204) pour pousser une plaque de revêtement (205) de l'élément de serrage (200) pour venir en contact avec un disque de frein (206).

2. - Unité de transmission de moteur (100) pour un dispositif de frein de stationnement électronique selon la revendication 1, dans laquelle l'élément d'entraînement (400) comprend une première section (401) et une seconde section (402), une bride (403) est située entre les première et seconde sections (401, 402), la première section (401) s'étend à travers le boîtier (300), la bride (403) est située dans le passage (301), le plateau (500) est relié par filetage à la seconde section (402).

3. - Unité de transmission de moteur (100) pour un dispositif de frein de stationnement électronique selon la revendication 2, dans laquelle la seconde section (402) de l'élément d'entraînement (400) comprend une rainure (407) définie en spirale dans une périphérie extérieure de celle-ci, le plateau (500) comprend des billes (505) qui sont reçues de manière mobile dans la rainure (407).

4. - Unité de transmission de moteur (100) pour un dispositif de frein de stationnement électronique selon la revendication 2, dans laquelle la seconde section (402) de l'élément d'entraînement (400) comprend des filets extérieurs (406) définis dans une périphérie extérieure de celle-ci, le plateau (500) comprend des filets intérieurs (502) qui sont reliés par filetage aux filets extérieurs (406), les filets extérieurs (406) et les filets intérieurs (502) sont des filets doubles.

5. - Unité de transmission de moteur (100) pour un dispositif de frein de stationnement électronique selon la revendication 2, dans laquelle un palier de butée à aiguilles (801) est monté sur la première section (401) de l'élément d'entraînement (400), le palier de butée à aiguilles (801) est situé entre la périphérie intérieure du passage (301) et la bride (403).

6. - Unité de transmission de moteur (100) pour un dispositif de frein de stationnement électronique selon la revendication 2, dans laquelle un autre palier de butée à aiguilles (802) est monté sur la seconde section (402) de l'élément d'entraînement (400), l'autre palier de butée à aiguilles (802) est situé entre la seconde face d'extrémité (504) du plateau (500) et la bride (403), les première et seconde faces d'extrémité (501, 504) sont situées à l'opposé l'une de l'autre.

7. - Unité de transmission de moteur (100) pour un dispositif de frein de stationnement électronique selon la revendication 1, dans laquelle l'unité de poussée comprend une tige branche (704) et une tête (705) qui est formée sur la tige (704), la bague d'étanchéité (202) de l'élément de serrage (200) est montée sur la tige (704), la tête (705) vient en contact avec le piston (204).

8. - Unité de transmission de moteur (100) pour un dispositif de frein de stationnement électronique selon la revendication 7, dans laquelle la tête (705) se situe excentrée ou coaxiale par rapport à la tige (704).

9. - Unité de transmission de moteur (100) pour un dispositif de frein de stationnement électronique selon la revendication 7, dans laquelle la tige (704) comprend une chambre (706) définie dans une extrémité distale opposée à la tête (705), l'extrémité distale de la tige (704) vient en contact avec la première face d'extrémité (501) du plateau (500), la seconde section (402) de l'élément d'entraînement (400) est située dans la chambre (706) de la tige (704) et n'est pas en contact avec un intérieur de la chambre (706).

10. - Unité de transmission de moteur (100) pour un dispositif de frein de stationnement électronique selon la revendication 1, dans laquelle l'unité de poussée (700) comprend une première partie (701) et une seconde partie (702) qui est reliée à la première partie (701), la première partie (701) vient en contact avec la première face d'extrémité (501), la seconde partie (702) vient en contact avec le piston (204), la bague d'étanchéité (202) de l'élément de serrage (200) est montée sur la seconde partie (702).

11. - Unité de transmission de moteur (100) pour un dispositif de frein de stationnement électronique selon la revendication 10, dans laquelle la première partie (701) et la seconde partie (702) sont reliées selon un motif de saillie et de creux, la première partie (701) comprend une chambre (703) définie dans une extrémité de celle-ci qui entre en contact avec la première face d'extrémité (501) du plateau (500).

12. - Unité de transmission de moteur (100) pour un dispositif de frein de stationnement électronique selon la revendication 1, dans laquelle une première fente (302) est définie dans une périphérie intérieure du passage (301), une seconde fente (503) est définie dans une périphérie extérieure du plateau (500), la tige (600) est reçue entre les première et seconde fentes (302, 503).
